# EUROPEAN PATENT SPECIFICATION

(11) **EP 1 709 697 B1**
(45) Date of publication and mention of the grant of the patent: **09.04.2008**
(21) Application number: 05702625.4
(22) Date of filing: 10.01.2005
(51) Int. Cl.: H01L 41/09, H01L 41/04

(54) **METHOD FOR DETERMINING A POSITION OF A DISPLACEABLE ELEMENT AS WELL AS A WAVE MOTOR**
VERFAHREN ZUR BESTIMMUNG EINER POSITION EINES VERSCHIEBBAREN ELEMENTS SOWIE WELLENMOTOR
PROCEDE PERMETTANT DE DETERMINER UNE POSITION D'UN ELEMENT MOBILE AINSI QU'UN MOTEUR A ONDES

(30) Priority: 22.01.2004 EP 04100219
(43) Date of publication of application: 11.10.2006
(73) Proprietor: Koninklijke Philips Electronics N.V., 5621 BA Eindhoven (NL)
(72) Inventor: VERMEULEN, Marcus, M., P., A., NL-5656 AA Eindhoven (NL); PEETERS, Felix, G., P., NL-5656 AA Eindhoven (NL); LIESS, Martin, D., NL-5656 AA Eindhoven (NL); FEENSTRA, Philippus, J., NL-5656 AA Eindhoven (NL); BREEDVELD, Pieter, C., NL-5656 AA Eindhoven (NL); DE BENEDICTIS, Giuseppe, A., 5656 AA Eindhoven (NL)
(74) Representative: Reints Bok, Wouter
(86) International application number: PCT/IB2005/050106
(87) International publication number: WO 2005/071768

(56) References cited:
- US-A- 5 006 749
- US-A1- 2001 015 591
- KUROSAWA M ET AL: "ULTRASONIC LINEAR MOTOR USING SURFACE ACOUSTIC WAVES" IEEE TRANSACTIONS ON ULTRASONICS, FERROELECTRICS AND FREQUENCY CONTROL, IEEE INC. NEW.YORK, US, vol. 43, no. 5, September 1996 (1996-09), pages 901-906, XP000633762 ISSN: 0885-3010
- HELIN P ET AL: "Angular and linear microvibromotor" 1997 INTERNATIONAL CONFERENCE ON SOLID-STATE SENSORS AND ACTUATORS. DIGEST OF TECHNICAL PAPERS. TRANSDUCERS 97. CHICAGO, IL, JUNE 16 - 19, 1997. SESSIONS 3A1 - 4D3. PAPERS NO. 3A1.01 - 4D3.14P, INTERNATIONAL CONFERENCE ON SOLID-STATE SENSORS AND ACTU, vol. VOL. 2, 16 June 1997 (1997-06-16), pages 61-62, XP010240407 ISBN: 0-7803-3829-4

## Description

The invention relates to a method for determining a position of an element which is displaceable relative to a stator, the stator comprising at least one transducer, an electric signal being generated on the transducer, so that a wave traveling in the surface of the stator is generated.

The invention also relates to a wave motor comprising an element displaceable relative to a stator, the stator comprising at least one transducer to generate a wave in the surface of the stator.

In a method and wave motor known from United States patent US-B2 6,331, 747 waves are generated in the surface of the stator by means of transducers located on a stator. A displaceable element is displaced over the surface of the stator by means of the waves.

A disadvantage of the known method and wave motor is that the position of the displaceable element relative to the stator is unknown.

Determining the position of the displaceable element relative to the stator would be possible by means of external sensors known per se, but such sensors are disadvantageous in that they take up space, are relatively expensive and form a component that has to be additionally mounted.

It is an object of the present invention, as defined in claim 1, to provide a method for determining in a simple manner the position of an element that can be displaced over a stator.

With the method according to the invention this object is achieved in that at least part of the wave is reflected to the transducer by the displaceable element, the position of the displaceable element relative to the stator being determined by a processor on the basis of the reflected wave.

The wave generated in the surface of the stator by means of the transducer travels through the surface of the stator with a velocity known beforehand. The waves are acoustic waves of which the velocity is known beforehand and depends on for example the material and the ambient conditions of the stator. As soon as the wave reaches the displaceable element, the wave is reflected completely or in part back to the transducer. By measuring the time between the generation of the wave in the transducer and the recording of the wave reflected by the displacing element by means of the transducer, for example by means of a processor, the position of the element can be determined. The time in which the emitted and reflected wave has gone to and fro through the stator to the displaceable element is multiplied by the velocity of the wave equal to twice the distance between the actuator and the displaceable element.

By means of the method according to the present invention it is possible also to displace the element relative to the stator by means of the waves generated by means of the transducer. So the transducer is used both for displacing the element and for determining the position of the element, while the higher harmonic wave can be used for determining the position.

An embodiment of the method according to the invention is characterized in that at least two transducers are provided, waves being generated by means of a first transducer for displacing the displaceable element, and waves being generated by means of a second transducer for determining the position of the displaceable element.

By the use of separate transducers for displacing and determining the position, each transducer can be optimized for the specific function, so that the displacement can be effected more accurately and determining the position can take place with a higher resolution.

Another embodiment of the method according to the invention is characterized in that the frequency of the waves generated by means of the first transducer is different from the frequency of the waves generated by the second transducer.

As a result of the different frequencies, the wave generated for determining the position can be simply distinguished from the wave for displacing the element, so that the position of the element can be determined more accurately.

The frequency of the wave for determining the position of the transducer is preferably higher than the frequency for displacing the displaceable element, because with a higher frequency the position of the element can be determined with a higher resolution.

Yet another embodiment of the method according to the invention is characterized in that by means of at least two transducers waves can be generated for determining the position of the displaceable element, which waves travel in the surface of the stator transversely to each other.

By means of transducers arranged in this way for determining the position of the displaceable element it is possible to determine the position of the displaceable element in various directions running transversely to each other.

A further embodiment of the method according to the invention is characterized in that the displaceable element is disposed between at least two transducers, the position being determined by means of the two transducers.

In this way the resolution with which the position is determined is higher.

The invention, as defined in claim 6, further has for an object to provide a wave motor by means of which the position can be simply determined of an element that can be displaced over a stator.

The wave motor comprises a processor, whereby in operation, the position of the displaceable element relative to the stator is determined by means of the processor from a wave reflected by the displaceable element to the transducer.

By means of the processor and the transducer the position of the element relative to the stator can be determined from the time between the generation of the wave and the registration of the reflected wave as well as from the wave velocity known beforehand.

Since the stator comprises the transducer, which can also be used, as required, for generating waves for displacing the element, the wave motor is relatively compact.

Besides, such a transducer can be integrated relatively simply with the stator, so that no additional assembling activities are necessary.

A further embodiment of the wave motor according to the invention is characterized in that at least two transducers are provided, the first transducer being instrumental in generating waves for the displacement of the displaceable element, the second transducer being instrumental in generating waves for determining the position of the displaceable element.

By means of two transducers each having a function of its own it is possible to determine accurately the position of the displaceable element as well as displace the element accurately.

Yet a further embodiment of the wave motor according to the invention is characterized in that waves for determining the position of the displaceable element can be generated by means of at least two transducers, which waves, in operation, travel transversely to each other in the surface of the stator.

By means of transducers arranged in this way the position of the displaceable element in two directions running transversely to each other can be determined.

Another embodiment of the wave motor according to the invention is characterized in that the displaceable element is disposed between at least two transducers, in which the position of the displaceable element can be determined by means of the two transducers.

Via such an arrangement the position of the displaceable element can be determined with a higher resolution.

The invention will be further explained with reference to the drawings in which:
Fig. 1 shows a perspective view of a first embodiment of a wave motor according to the invention,
Fig. 2 shows a perspective view of a second embodiment of a wave motor according to the invention.

In the Figures like component parts have like reference numerals.

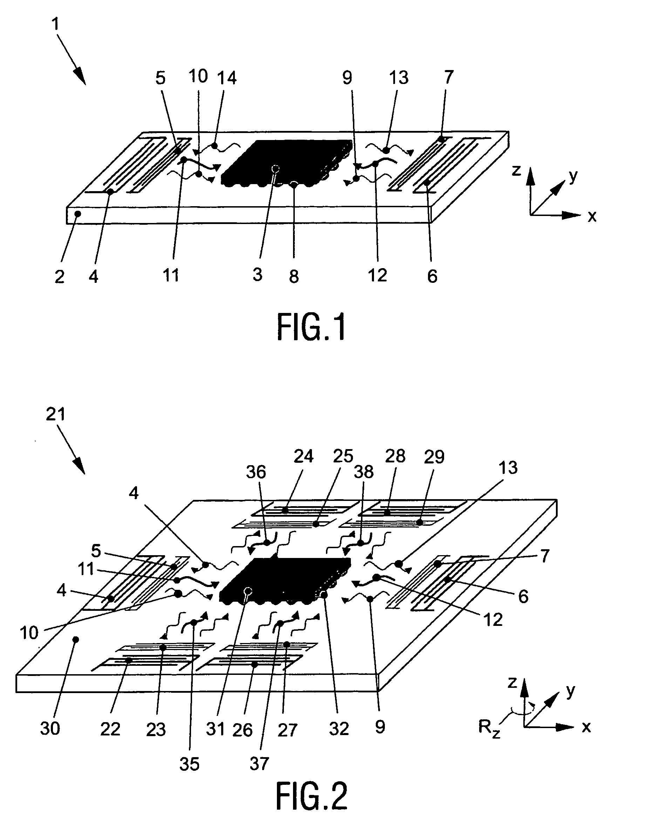

Fig. 1 shows a wave motor 1 comprising a stator 2 extending horizontally in an X and a Y plane and a displaceable element 3 disposed on the stator 2. The surface of the stator 2 facing the element 3 is composed of a thin layer of preferably piezo-electrical material with pairs of electrodes located on both sides of the surface of the stator 2, which electrodes form the transducers 4,5 and 6,7. The transducers 4, 5, 6, 7 are for example what are called interdigital transducers (IDT). Each transducer 4, 5, 6, 7 is electrically connected to a generator (not shown).

An electric wave signal Vᵢ = Vₒᵢ sin (ωᵢt + øᵢ) can be produced on each transducer 4, 5, 6, 7 by means of the generators, where i is the number of the transducer. The electric wave signals generated by means of the transducers 4, 5, 6, 7 cause surface-acoustic waves to occur in the surface of the stator 2.

The displaceable element 3 comprises on a side facing the stator 2 spherical contact faces 8 by means of which the displaceable element 3 rests on the surface of the stator 2.

By means of the waves 11, 12 generated by means of the transducers 4, 6, the spherical contact faces 8 and, therefore, the element, are displaced.

The waves 9, 10 generated by means of the transducers 5, 7 travel through the upper surface of the stator 2 in the direction of the displaceable element 3. The moment the waves 9, 10 reach the displaceable element 3, the waves 9, 10 will be reflected completely or in part as wave 13, 14 respectively by the spherical contact faces 8 in the direction of the transducers 5, 7 respectively. The reflected wave 13, 14 is recorded as an electric wave signal by the transducers 5, 7. The transducers 5, 7 are connected to a processor (not shown) by means of which the time is recorded between the generating of the wave 9, 10 in the relevant transducer 5, 7 and the recording of the reflected wave 13, 14.

The velocity at which the waves 9, 10, 11, 12, 13, 14 travel through the piezo-electrical surface depends inter alia on the material and the ambient conditions such as temperature of the piezo-electrical material.

This wave velocity is known beforehand. Subsequently, the processor is instrumental in the computation of the position of the displaceable element 3 from the time and velocity.

Since the position of the element is simultaneously determined by means of the waves generated by both transducer 5 and transducer 7, determining the position can be effected with a relatively high resolution.

Based on the position of the displaceable element 3 on the stator 2 the electric signal to the transducers 4, 6 can be driven such that the displaceable element 3 is moved to a desired position.

The waves 9, 10 generated by means of the transducers 5, 7 preferably have a different higher frequency f than the waves 11, 12 generated by means of the transducers 4, 6. The higher the frequency f the smaller the wavelength λ. Since the transducers 5, 7generate waves with a relatively high frequency f, the wavelength λ of the waves 9, 10 is relatively short, so that the dimension of the transducers 5, 7 can be relatively small and require little surface area on the stator. In addition, interference between the waves 9, 10, 13, 14 on the one hand and the waves 11, 12 on the other, with relatively large frequency differences between the waves 9, 10, 13, 14 of the transducers 5, 7 and the waves 11, 12 of the transducers 4, 6, will substantially not disturb the displacement and measurement. A high wave frequency of the waves 9, 10, 13, 14 is furthermore advantageous in that the displacements of the displaceable element 3 is recorded with a high resolution.

Fig. 2 shows a second embodiment of the wave motor 21 according to the invention which, besides two pairs of transducers 4, 5; 6, 7, comprises four further transducer pairs 22, 23; 24, 25; 26, 27; 28, 29 which are accommodated on a stator 30. The pairs 22, 23 and 24, 25 are positioned opposite to each other in the Y direction. The pairs 26, 27 and 28, 29 are also positioned opposite to each other in the Y direction. The pairs 22, 23 and 26, 27 and 24, 25 and 28, 29 respectively are positioned side by side in X-direction. A displaceable element 31 is disposed on the stator 30 between the transducers. The stator 30 with the transducers 4-7, 22-29 disposed thereon form a displacement system for the displaceable element 31 disposed thereon, which rests with spherical contact faces 32 on the surface of the stator 30. The element 31 is displaceable over the stator surface 30 in both X and Y direction between the transducers 4-7, 22-29.

The transducers are connected to generators for generating electric wave signals on the transducers 4, 5, 6, 7, 22, 23, 24, 25, 26, 27, 28, 29.

The element 31 can be displaced by the waves 11, 12 in and contrary to the direction indicated by the arrow X by the driving of the transducers 4, 6 whereas, as a result of the driving of the transducers 22, 24, 26, 28 the element 31 can be displaced in and contrary to the direction indicated by the arrow Y by means of the waves 35, 36, 37, 38. In addition, it is possible to rotate the element 31 in and contrary to the direction indicated by the arrow R_{z} by simultaneously driving the transducers 22, 28 and 24, 26 respectively.

In similar fashion to the one described with reference to Fig. 1, the position of the element 31 on the surface of the stator 30 can be determined by the transducers 5, 7, 23, 25, 27, and 29.

The position of the element in X-direction is then determined by means of the transducers 5, 7 and the position of the element in Y-direction and in R_{z} direction is determined by means of the transducers 23, 25, 27, 29.

It is alternatively possible to make the entire stator of piezo-electrical material.

It is also possible to both displace the element 3 and determine the position of the element by means of a single transducer. The waves by means of which the element is displaced will be reflected completely or partly by the element.

It is also possible to utilize only a single or a single pair of transducers both for displacing and for determining the position of the element.

It is also possible to utilize other displacing systems for displacing the element.

In order to obtain a proper measurement it is possible to effect measurements at the stator prior to the displacement and the measurement of the displacement of the element, while waves are generated in the stator with the element not yet being provided on the stator. This provides a proper reference.

In order to increase the accuracy of the measurements it is possible to measure the temperature of the stator since the wave velocity also depends on temperature. It is also possible to determine the wave velocity and thus the temperature of the stator from the measured distance when the object has a known position relative to the actuator.

It is also possible to apply what are called comb transducers or wedge transducers.

It is alternatively possible to utilize different shapes in lieu of spherical contact faces 8.

## Claims

1. A method for determining a position of an element (3) which is displaceable relative to a stator (2), the stator (2) comprising at least one transducer (4-7; 22-29), an electric signal being generated on the transducer (4-7; 22-29), so that a wave traveling in the surface of the stator (2) is generated, **characterized in that** at least part of the wave is reflected to the transducer (4-7; 22-29) by the displaceable element (3), the position of the displaceable element (3) relative to the stator (2) being determined by a processor on the basis of the reflected wave.

2. A method as claimed in claim 1, **characterized in that** at least two transducers (4-7; 22-29) are provided, waves being generated by means of a first transducer (4-7; 22-29) for displacing the displaceable element (3), and waves being generated by means of a second transducer (4-7; 22-29) for determining the position of the displaceable element (3).

3. A method as claimed in claim 2, **characterized in that** the frequency of the waves generated by means of the first transducer (4-7; 22-29) is different from the frequency of the waves generated by means of the second transducer (4-7; 22-29).

4. A method as claimed in any one of the preceding claims1-3, **characterized in that** by means of at least two transducers (4-7; 22-29) waves are generated for determining the position of the displaceable element (3), which waves travel in the surface of the stator (2) transversely to each other.

5. A method as claimed in any one of the preceding claims 1-4, **characterized in that** the displaceable element (3) is disposed between at least two transducers (4-7; 22-29), the position being determined by means of the two transducers (4-7; 22-29).

6. A wave motor(1) comprising an element (3) displaceable relative to a stator (2), the stator (2) comprising at least one transducer (4-7; 22-29) to generate a wave can in the surface of the stator (2), **characterized in that**, the wave motor comprises a processor, whereby in operation, the position of the displaceable element (3) relative to the stator (2) is determined by means of the processor from a wave reflected by the displaceable element (3) to the transducer (4-7; 22-29).

7. A wave motor(1) as claimed in claim 6, **characterized in that** at least two transducers (4-7; 22-29) are provided, the first transducer (4-7; 22-29) being instrumental in generating waves for the displacement of the displaceable element (3), the second transducer (4-7; 22-29) being instrumental in generating waves for determining the position of the displaceable element (3).

8. A wave motor(1) as claimed in claim 7 or 8, **characterized in that** waves for determining the position of the displaceable element (3) can be generated by means of at least two transducers (4-7; 22-29) which waves, in operation, travel transversely to each other in the surface of the stator (2).

9. A wave motor(1) as claimed in any one of the claims 7-9, **characterized in that** displaceable element (3) is disposed between at least two transducers (4-7; 22-29), in which the position of the displaceable element (3) can be determined by means of the two transducers (4-7; 22-29).

## Patentansprüche

1. Verfahren zur Bestimmung einer Position eines Elements (3), das relativ zu einem Stator (2) verschiebbar ist, wobei der Stator (2) mindestens einen Wandler (4 bis 7; 22 bis 29) umfasst, wobei ein elektrisches Signal auf dem Wandler (4 bis 7; 22 bis 29) erzeugt wird, derart, dass eine Welle erzeugt wird, die sich in der Oberfläche des Stators (2) bewegt, **dadurch gekennzeichnet, dass** mindestens ein Teil der Welle durch das verschiebbare Element (3) zum Wandler (4 bis 7; 22 bis 29) reflektiert wird, wobei die Position des verschiebbaren Elements (3) relativ zum Stator (2) durch einen Prozessor basierend auf der reflektierten Welle bestimmt wird.

2. Verfahren nach Anspruch 1, **dadurch gekennzeichnet, dass** mindestens zwei Wandler (4 bis 7; 22 bis 29) bereitgestellt werden, wobei mit Hilfe eines ersten Wandlers (4 bis 7; 22 bis 29) Wellen zum Verschieben des verschiebbaren Elements (3) erzeugt werden, und mit Hilfe eines zweiten Wandlers (4 bis 7; 22 bis 29) Wellen zum Bestimmen der Position des verschiebbaren Elements (3) erzeugt werden.

3. Verfahren nach Anspruch 2, **dadurch gekennzeichnet, dass** die Frequenz der Wellen, die mit Hilfe des ersten Wandlers (4 bis 7; 22 bis 29) erzeugt werden, sich von der Frequenz der Wellen unterscheidet, die mit Hilfe des zweiten Wandlers (4 bis 7; 22 bis 29) erzeugt werden.

4. Verfahren nach einem der vorhergehenden Ansprüche 1 bis 3, **dadurch gekennzeichnet, dass** mit Hilfe von mindestens zwei Wandlern (4 bis 7; 22 bis 29) Wellen zur Bestimmung der Position des verschiebbaren Elements (3) erzeugt werden, wobei die Wellen sich in der Oberfläche des Stators (2) quer zueinander bewegen.

5. Verfahren nach einem der vorhergehenden Ansprüche 1 bis 4, **dadurch gekennzeichnet, dass** das verschiebbare Element (3) zwischen mindestens zwei Wandlern (4 bis 7; 22 bis 29) angeordnet ist, wobei die Position mit Hilfe der zwei Wandler (4 bis 7; 22 bis 29) bestimmt wird.

6. Wellenmotor (1), der ein Element (3) umfasst, das relativ zu einem Stator (2) verschiebbar ist, wobei der Stator (2) mindestens einen Wandler (4 bis 7; 22 bis 29) zum Erzeugen einer Welle in der Oberfläche des Stators (2) umfasst, **dadurch gekennzeichnet, dass** der Wellenmotor einen Prozessor umfasst, wodurch im Betrieb die Position des verschiebbaren Elements (3) relativ zum Stator (2) mit Hilfe des Prozessors von einer durch das verschiebbare Element (3) zum Wandler (4 bis 7; 22 bis 29) reflektierten Welle bestimmt wird.

7. Wellenmotor (1) nach Anspruch 6, **dadurch gekennzeichnet, dass** mindestens zwei Wandler (4 bis 7; 22 bis 29) bereitgestellt werden, wobei der erste Wandler (4 bis 7; 22 bis 29) als Mittel zur Erzeugung von Wellen für die Verschiebung des verschiebbaren Elements (3) dient und der zweite Wandler (4 bis 7; 22 bis 29) als Mittel zur Erzeugung von Wellen zur Bestimmung der Position des verschiebbaren Elements (3) dient.

8. Wellenmotor (1) nach Anspruch 7 oder 8, **dadurch gekennzeichnet, dass** mit Hilfe von mindestens zwei Wandlern (4 bis 7; 22 bis 29) Wellen zur Bestimmung der Position des verschiebbaren Elements (3) erzeugt werden können, wobei die Wellen im Betrieb sich in der Oberfläche des Stators (2) quer zueinander bewegen.

9. Wellenmotor (1) nach einem der Ansprüche 7 bis 9, **dadurch gekennzeichnet, dass** das verschiebbare Element (3) zwischen mindestens zwei Wandlern (4 bis 7; 22 bis 29) angeordnet ist, wobei die Position des verschiebbaren Elements (3) mit Hilfe der zwei Wandler (4 bis 7; 22 bis 29) bestimmt werden kann.

## Revendications

1. Procédé pour déterminer une position d'un élément (3) qui est mobile par rapport à un stator (2), le stator (2) comprenant au moins un transducteur (4 à 7, 22 à 29), un signal électrique étant généré sur le transducteur (4 à 7, 22 à 29), de sorte qu'il est généré une onde se propageant dans la surface du stator (2), **caractérisé en ce qu'**au moins une partie de l'onde est réfléchie vers le transducteur (4 à 7, 22 à 29) par l'élément mobile (3), la position de l'élément mobile (3) par rapport au stator (2) étant déterminée par un processeur sur la base de l'onde réfléchie.

2. Procédé selon la revendication 1, **caractérisé en ce qu'**il est fourni au moins deux transducteurs (4 à 7, 22 à 29), des ondes étant générées au moyen d'un premier transducteur (4 à 7, 22 à 29) pour déplacer l'élément mobile (3) et des ondes étant générées au moyen d'un second transducteur (4 à 7, 22 à 29) pour déterminer la position de l'élément mobile (3).

3. Procédé selon la revendication 2, **caractérisé en ce que** la fréquence des ondes qui sont générées au moyen du premier transducteur (4 à 7, 22 à 29) est différente de la fréquence des ondes qui sont générées au moyen du second transducteur (4 à 7, 22 à 29).

4. Procédé selon l'une quelconque des revendications précédentes 1 à 3, **caractérisé en ce qu'**au moyen d'au moins deux transducteurs (4 à 7, 22 à 29) des ondes sont générées pour déterminer la position de l'élément mobile (3), lesquelles ondes se propagent dans la surface du stator (2) d'une manière transversale l'une à l'autre.

5. Procédé selon l'une quelconque des revendications précédentes 1 à 4, **caractérisé en ce que** l'élément mobile (3) est disposé entre au moins deux transducteurs (4 à 7, 22 à 29), la position étant déterminée au moyen des deux transducteurs (4 à 7, 22 à 29).

6. Moteur à ondes (1) comprenant un élément (3) qui est mobile par rapport à un stator (2), le stator (2) comprenant au moins un transducteur (4 à 7, 22 à 29) pour générer une onde dans la surface du stator (2), **caractérisé en ce que** le moteur à ondes comprend un processeur, processeur à l'aide duquel, lorsqu'il est en fonctionnement, on peut déterminer la position de l'élément mobile (3) par rapport au stator (2) à partir d'une onde qui est réfléchie par l'élément mobile (3) vers le transducteur (4 à 7, 22 à 29).

7. Moteur à ondes (1) selon la revendication 6, **caractérisé en ce qu'**il est fourni au moins deux transducteurs (4 à 7, 22 à 29), le premier transducteur (4 à 7, 22 à 29) contribuant à générer des ondes pour le déplacement de l'élément mobile (3) et le second transducteur (4 à 7, 22 à 29) contribuant à générer des ondes pour déterminer la position de l'élément mobile (3).

8. Moteur à ondes (1) selon la revendication 7 ou 8, **caractérisé en ce que** des ondes pour déterminer la position de l'élément mobile (3) peuvent être générées au moyen d'au moins deux transducteurs (4 à 7, 22 à 29), lesquelles ondes, en fonctionnement, se propagent l'une transversalement à l'autre dans la surface du stator (2).

9. Moteur à ondes (1) selon l'une quelconque des revendications précédentes 7 à 9, **caractérisé en ce que** l'élément mobile (3) est disposé entre au moins deux transducteurs (4 à 7, 22 à 29) dans lesquels on peut déterminer la position de l'élément mobile (3) au moyen des deux transducteurs (4 à 7, 22 à 29).
